Europäisches Patentamt

European Patent Office

Office européen des brevets

(19)

(11) Publication number: 0 400 828 A1

## (12) EUROPEAN PATENT APPLICATION

(21) Application number: 90305092.0

(51) Int. Cl.5: G01F 19/00

(22) Date of filing: 11.05.90

(30) Priority: 13.05.89 GB 8911007

(43) Date of publication of application:
05.12.90 Bulletin 90/49

(84) Designated Contracting States:
AT BE CH DE DK ES FR GB GR IT LI LU NL SE

(71) Applicant: Smith, Michael Edwin James
23 Parkfield Road
Taunton, Somerset TA1 4RW(GB)

Applicant: Smith, Joanna Isabella
23 Parkfield Road
Taunton, Somerset TA1 4RW(GB)

(72) Inventor: Smith, Michael Edwin James
23 Parkfield Road
Taunton, Somerset TA1 4RW(GB)
Inventor: Smith, Joanna Isabella
23 Parkfield Road
Taunton, Somerset TA1 4RW(GB)

(74) Representative: Brown, David Leslie et al
Page & Co. Temple Gate House Temple Gate
Bristol BS1 6PL(GB)

(54) Adjustable measuring cup assembly.

(57) An adjustable measuring cup assembly 1 comprises a plurality of cup receptacles 3 each of known volume and retaining means 4 in the form of a frame 9 adapted to releasably retain an array of a selected number of said receptacles according to the total desired measuring volume. The assembly also carries a releasable handle 2 for ease of manual use. Each cup carries formations 12, 14 permitting it to snap into engagement with the retaining frame 9 at the rim of an aperture 10 therein.

A funnel and spatula are also provided as a kit of parts with the assembly, for assisting the transfer of measured material the powder to a relatively narrow-necked container.

The kit is particularly suitable for measuring amounts of powdered milk into a baby's feeding bottle.

Fig 1

## ADJUSTABLE MEASURING CUP ASSEMBLY

This invention relates to an adjustable measuring cup assembly. More particularly, the invention relates to a measuring cup assembly suitable for measuring food powder, such as dried baby-food milk powder.

One small plastic measuring cup, having a handle and being in the form of a scoop having a single cup is conventionally provided inside milk powder tins. The volume of the cup is selected so that one cupful can be diluted with a conveniently measured amount of boiled cooled water to provide the correct strength of milk. In Great Britain, for example, conventional scoops are used to measure in one cupful sufficient milk powder for one fluid ounce (28.4 ml) of water. In this way, a baby can be fed on milk, if necessary from birth until weaning.

These conventional small scoops, however, are time-consuming in use and can often result in miscounts when preparing a number of bottles at one time. The use of the conventional scoops can often also create waste and mess as each cupful is emptied into the relatively narrow neck of a baby's feeding bottle, typically by tapping the back of the scoop.

As the baby's appetite increases as it grows, the number of cupfuls to be deposited in the bottle increases. At birth, typically about 3 fluid ounces (85 ml) of water is required to make up sufficient milk for one feed, necessitating three cupfuls of powder using the conventional British scoop. The number of cupfuls increases to a typical maximum of about seven or eight.

It is advantageous for parents and baby-care professionals, e.g. nurses at maternity hospitals, to make up more than one bottle of milk (sometimes many bottles) at one time for use in later feeds. To prepare, for example, six full bottles (or sufficient milk to fill six bottles), as is often done, can require forty-eight cup filling movements, forty-eight levelling off motions (whereby a level cupful as opposed to a heaped cupful is created), and forty-eight tipping and tapping movements. Any distractions during this procedure can result in miscounting the number of cupfuls already measured out, which consequently can result in upsetting the baby's digestive system should the error not be noticed. Should the error be noticed, the whole procedure must begin again, and it would be necessary to discard any part-formulated milk.

According to one aspect of the present invention, there is provided an adjustable measuring cup assembly comprising a plurality of cup receptacles each of known volume and retaining means adapted to releasably retain an array of a selected number of said receptacles according to the total desired measuring volume of the assembly.

Preferably the receptacle retaining means is a frame for retaining the desired receptacles and is adapted to be hand held, or to engage with a detachable handle, and to retain the receptacles in a side by side array via snap or push fitting of portions of the receptacles into cooperating portions of the retaining means. The receptacles are thus retained so that they will not fall out of the frame if the assembly is inverted to discharge powder from the receptacles. The detachable handle may suitably be securable to the retaining means by any convenient means, e.g. a spring clip, screw fitting, or snap or push fitting.

The receptacles may suitably, but not essentially, all be of equal volume.

The assembly may conveniently further include a cover plate adapted to overlie a desired number of the receptacles in the retaining means. The cover plate and the retaining means are suitably adapted to cooperate one with the other to permit the cover plate to slide over the retained array of receptacles between a first position in which the cover plate overlies relatively few receptacles and a second position in which it overlies relatively more receptacles. Such a cover plate is useful, for example, to protect powder in the receptacles, to prevent spillage, to provide a hand-hold and to assist in levelling off heaped powder in the compartments to create a levelled volume of powder in the compartments.

Most preferably, the assembly according to the invention is adapted to be used as a scoop for scooping a desired amount of milk powder from a tin thereof into a container such as a baby's feeding bottle.

Where such a container has a relatively narrow mouth, however, we have found that a separate relatively wide-mouthed funnel is desirably used to enable an efficient deposit of milk powder into the bottle.

According to a second aspect of the present invention, therefore, there is provided a kit of parts for transferring a measured amount of a material (e.g. food or milk powder) from a first relatively wide-mouthed container to a second relatively narrow-mouthed container, the kit comprising (a) a measuring cup assembly according to the present invention and (b) a relatively wide-mouthed funnel adapted to be snugly retained to the neck or mouth of the second container. The kit may suitably further comprise a spatula adapted to provide a straight edge for levelling powder in the measure.

The funnel may be of generally conventional construction, having typically an inverted frustoconical upper portion presenting a relatively wide upwardly open mouth and a lower portion communicating to the upper portion and adapted to be received in, or abut to, the neck or mouth of the relatively narrow-mouthed container during use. The lower portion may be shaped so as to be snugly fittable within the neck or mouth of said container.

A generally cylindrical collar preferably depends from the outer face of the funnel so as to snugly receive the rim of the container mouth, for extra security of attachment of the funnel. Most preferably, the collar is of such a thickness and profile that its outer face can itself be snugly received in the neck or mouth of an alternative wider-mouthed container that it may be desired to deposit material into (e.g. a wider-mouthed feeding bottle for a baby).

Specific embodiments of the invention will now be described by way of example with reference to the accompanying drawings, in which:

Fig. 1 shows in perspective an adjustable measuring cup assembly suitable for transferring a measured amount of milk powder from a tin to a baby's feeding bottle, illustrating the separability of individual cup receptacles;

Fig. 2 shows (a) in perspective and (b) in vertical section along the line X-X looking in the direction of the arrows, certain components of the assembly Fig. 1;

Fig. 3 shows in perspective (a) a funnel and (b) a spatula for use with the assembly of Fig. 1;

Fig. 4 shows a vertical cross-sectional view through the funnel of Fig. 3(a);

Fig. 5 shows in perspective the assembly of Fig. 1 in use;

Fig. 6 shows in perspective an alternative adjustable measuring cup assembly suitable for transferring a measured amount of milk powder from a tin to a baby's feeding bottle; and

Fig. 7 shows in perspective the components of the assembly of Fig. 6.

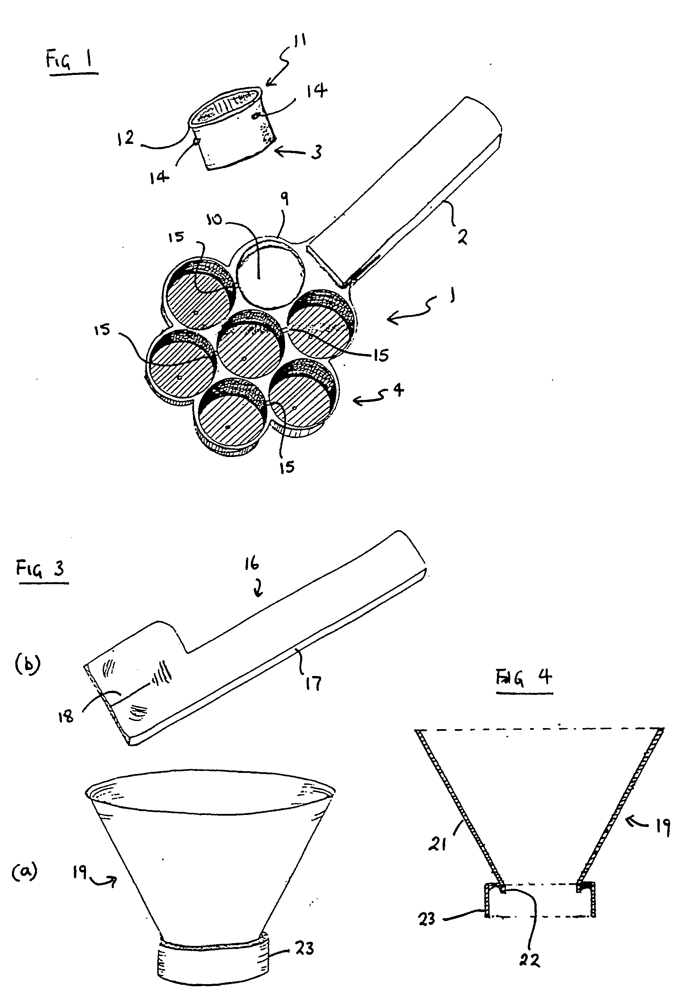

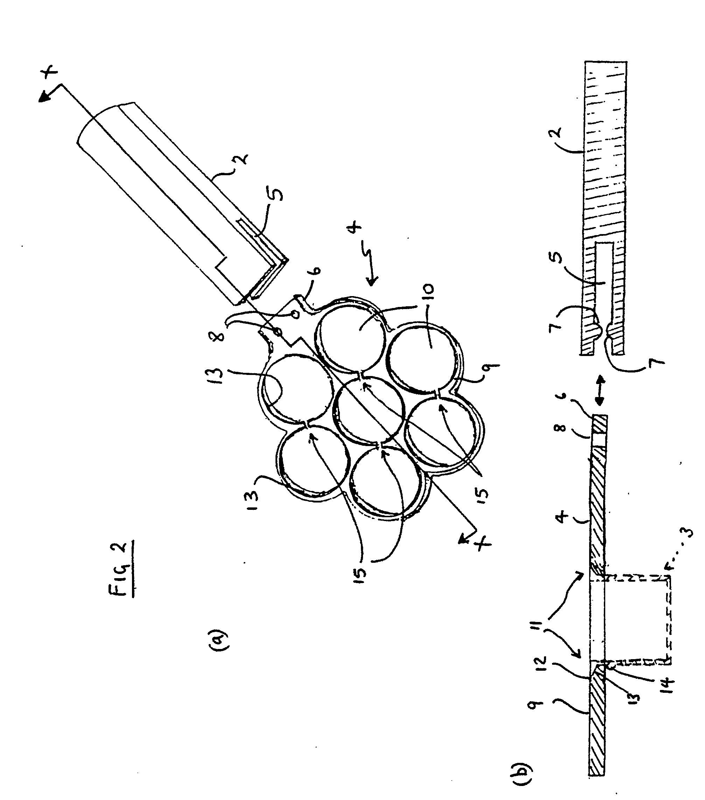

Referring to Figs. 1 and 2, an adjustable powder measuring cup assembly 1 is shown, comprising a powder scoop formed of the following component parts: a handle 2, seven cup receptacles 3 and a cup holder 4.

The handle 2 is provided with a groove 5 to receive a tongue 6 provided on the cup holder 4 and arranged to snap-engage one into the other by means of domed projections 7 on the mutually inwardly facing sides of the groove 5 being received in through-holes 8 of the tongue 6.

The cup holder 4 takes the general form of a frame 9 defining a regular array of seven closely-spaced circular apertures 10 therein, each aperture 10 adapted to receive from its top side the closed end of one cup 3 and to retain said cup via snap fitting in the region of the cup rim 11.

For this purpose, the cup rim 11 carries an outwardly projecting circumferential lip 12 angled so as to seat on a correspondingly chamfered rim 13 of the aperture 10 and so that the top of the cup rim 11 meets substantially flush with the upper face of the cup holder 4. Such flush fitting prevents powder or dirt from collecting between the cup and the cup holder.

The parts 2, 3 and 4 are preferably formed of moulded plastics material.

The cup 3 also carries three outwardly projecting dome formations 14 spaced equally around the cup outer wall slightly below the projecting lip 12.

On inserting the cup 3 into the aperture 10 to assemble a cup into the holder, the domes 14 force resiliently outwards the parts of frame 9 forming the walls of the aperture 10 (this outward deformation is facilitated by providing the aperture 10 walls with expansion breaks or gaps at points 15). Once the domes 14 have passed through the aperture 10 the frame 9 snaps back to its resting state and the lip 12 is seated on the chamfered aperture rim 13, to retain the cup 3 in the holder 4 as previously described. The above assembly procedure is repeated until the desired number of cups are retained in the holder 4.

Referring now also to Figs. 3 to 5, to measure out powder the assembly is lowered into a relatively wide-mouthed container (not shown) for the powder to fill all the cups present. A spatula 16 is provided as one of a kit of parts, the spatula having a straight edge 17 which is drawn across the top face of the scoop holder 4 to level off the powder in each container, excess powder being returned to the container.

The spatula 16, which is suitably formed of moulded plastics material, is formed at one end into a relatively wide channel 18 of generally V-cross-section, the function of which will be described in greater detail below.

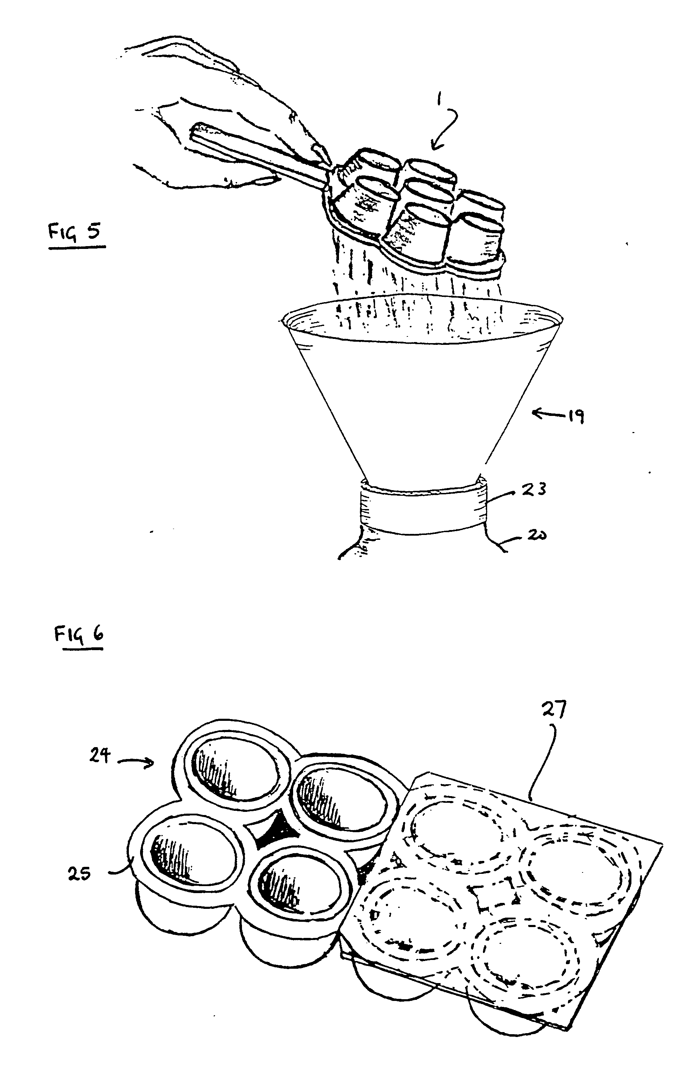

To deposit the measured amount of powder into a relatively narrow-necked container such as a baby's feeding bottle, a funnel 19, wide enough to accommodate the whole array of cups in the assembly, is placed securely over the rim of the bottle 20 as shown in Fig. 5, and the assembly 1 inverted over the funnel mouth and tipped into the funnel. One or two gentle finger taps on the back (now upper) face of the assembly will release all the powder into the funnel 19.

Any residual powder which may be left sticking to the interior of the funnel can be dislodged using the wide channel portion 18 of the spatula 16. In this way all the powder can be deposited into the bottle 20.

The funnel 19 is designed to ensure that it seats securely onto the rim of the bottle 20. As shown particularly in Figs. 3 and 4, the funnel 19 comprises an upper portion 21 adapted to present a relatively wide upwardly open mouth, a lower generally cylindrical portion 22 abutting the rim of the bottle mouth and a generally cylindrical collar 23 depending from the outer face of the funnel, into which collar the rim of the bottle 20 is snugly received for abutment to the lower portion 22 of the funnel.

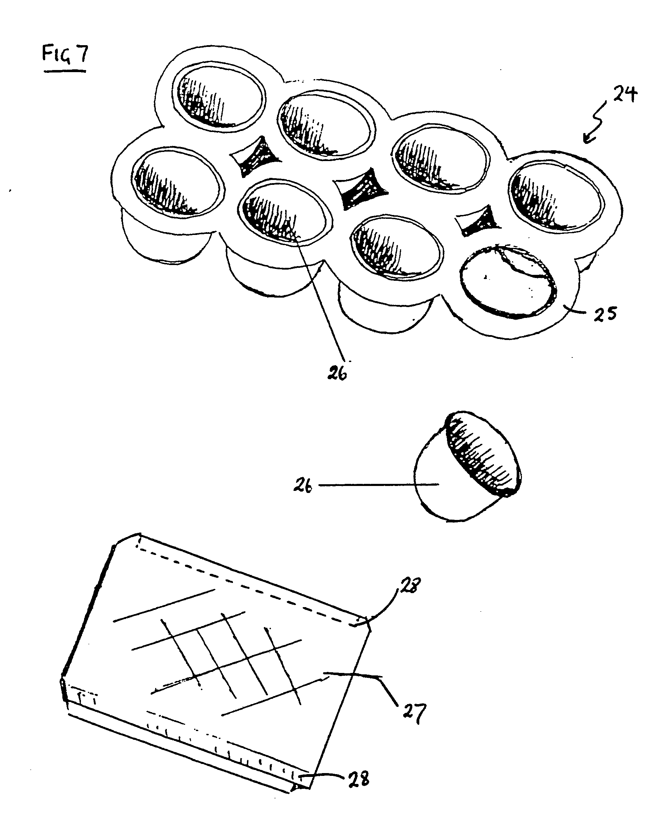

Referring now to Figs. 6 and 7, an alternative measuring cup assembly 24 is shown, comprising a cup holder 25 and cups 26 releasably secured in the holder 25 in a snap-fit engagement analogously to the cups 3 previously described.

As shown in Figs. 6 and 7, a slidable cover plate 27 is provided, which enables a number of the cups 26 to be covered.

The parts 25, 26 and 27 are preferably formed of moulded plastics material.

The method of using the assembly of Figs. 6 and 7 is substantially as described above in relation to Figs. 1 to 5. The assembly of Figs. 6 and 7, however, is more suitable for measuring powder from relatively narrow containers as the overall width of the array of cups is only two cup-widths.

The cover plate 27 is slidable on the cup holder 25, and is provided along its long sides with a pair of mutually inwardly directed ribs 28 spaced slightly away from the underside of the cover plate to define guide channels which receive the long side edges of the cup holder 25 and permit the cover plate to slide along the holder overlying the cups 26 as desired.

To use the assembly of Figs. 6 and 7, the assembly is gently pushed into the powder, filling the cups not covered by the cover plate 27. The cover plate 27 is then slid over the surface of the filled area in order to level off and cover that area of filled cups.

The cover plate 27 is then held in that position and, if desired, further empty cups which are not covered by the plate 27 (e.g. cups at the other end of the holder 25) are then filled in the same way by repeating the procedure as described above. The plate 27 is then pushed along the body of assembly across the newly filled area, levelling-off and closing that area and exposing the area first filled which is now ready for tipping into the funnel as described above. The second half of the assembly is emptied into the funnel in an analogous way.

**Claims**

1. An adjustable measuring cup assembly comprising a plurality of cup receptacles each of known volume and retaining means adapted to releasably retain an array of a selected number of said receptacles according to the total desired measuring volume of the assembly.

2. An assembly according to Claim 1, wherein the retaining means is adapted to retain the receptacles via snap or push fitting of portions of the receptacles into cooperating portions of the retaining means.

3. An assembly according to Claim 2, wherein the said portions of the retaining means are resiliently deformable to permit snap fitting of the receptacles into the retaining means.

4. An assembly according to any one of the preceding Claims, wherein the retaining means is adapted to releasably engage with handle means for manual use of the apparatus.

5. An assembly according to any one of the preceding Claims, further including a cover plate adapted to overlie a desired number of said receptacles.

6. An assembly according to Claim 5, wherein the cover plate and the retaining means are adapted to cooperate one with the other to permit the cover plate to slide over the retained array of receptacles between a first position in which the cover plate overlies relatively few receptacles and a second position in which it overlies relatively more receptacles.

7. A kit of parts for transferring a measured amount of a material from a first relatively wide-mouthed container to a second relatively narrow-mouthed container, the kit comprising (a) a measuring cup assembly according to any one of the preceding Claims and (b) a relatively wide-mouthed funnel adapted to be snugly retained to the neck or mouth of the second container.

8. A kit of parts according to Claim 7, wherein the funnel comprises an upper portion adapted to present a relatively wide upwardly open mouth, a lower portion communicating to the upper portion and adapted to be received in, or abut to, the neck or mouth of the second container, and a generally cylindrical collar depending from the outer face of the funnel, into which collar the rim of the container mouth is snugly received in use.

9. A kit of parts according to Claim 8, wherein the collar has an external diameter such that, as an alternative to use with containers receivable in the collar, the collar may be fitted into the neck or mouth of a wider-mouthed container so that the funnel is snugly retained thereto.

Fig 1

Fig 3

(b)

Fig 4

(a)

FIG 2

(a)

(b)

EP 0 400 828 A1

FIG 5

FIG 6

FIG 7

24

25

26

26

28

27

28

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | BE-A- 896 938 (M. STAAR)<br>* pages 2,3; figures 1,2 * | 1-3 | G 01 F 19/00 |
| A | US-A-4 154 109 (S.J.P. KELSON)<br>* abstract; figures 1,4 * | 4,5 | |
| A | PATENT ABSTRACTS OF JAPAN<br>vol. 8, no. 237 (P-310)(1674), 30<br>October 1984; & JP-A-59112228 (M.<br>YOKOHAMA) 28.06.1984 * the whole<br>document * | 6 | |
| A | US-A-3 747 414 (M. OHNO)<br>* abstract; column 3, lines 32-36;<br>figures 1,2 * | 7 | |

|  |  | TECHNICAL FIELDS SEARCHED (Int. Cl.5) |
|---|---|---|
| | | G 01 F<br>G 01 G<br>A 61 J<br>A 47 J<br>B 65 D |

The present search report has been drawn up for all claims

| Place of search | Date of completion of the search | Examiner |
|---|---|---|
| BERLIN | 10-09-1990 | VORROPOULOS G |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................
& : member of the same patent family, corresponding
    document

EPO FORM 1503 03.82 (P0401)